# NEW EUROPEAN PATENT SPECIFICATION

(11) **EP 3 578 843 B2**
(45) Date of publication and mention of the opposition decision: **27.05.2026**
(45) Mention of the grant of the patent: 11.10.2023
(21) Application number: 18748378.9
(22) Date of filing: 24.01.2018
(51) Int. Cl.: B29C 43/18, B29C 43/20, F16D 65/092, F16D 69/02, B29B 7/90, F16D 69/04, B29L 31/16, B29K 705/00, B29K 101/10, B29C 45/02, B29C 45/14, F16D 69/00

(54) **BRAKE PAD FOR DISK BRAKE**
BREMSBELAG FÜR SCHEIBENBREMSE
PLAQUETTE DE FREIN POUR FREIN À DISQUE

(30) Priority: 03.02.2017 JP 2017018286
(43) Date of publication of application: 11.12.2019
(73) Proprietor: Sumitomo Bakelite Co., Ltd., Shinagawa-ku Tokyo 140-0002 (JP); Sumitomo Bakelite Europe (Ghent), 9000 Gent (BE)
(72) Inventor: KOIZUMI, Koji, Tokyo 140-0002 (JP); INOKUCHI, Hideaki, Tokyo 140-0002 (JP); DE KEYSER, Hendrik, 9000 Gent (BE)
(74) Representative: Ter Meer Steinmeister & Partner
(86) International application number: PCT/JP2018/002067
(87) International publication number: WO 2018/143027

(56) References cited:
- EP-A1- 2 975 287
- JP-A- 2006 002 885
- JP-A- 2010 255 773
- JP-A- 2010 255 773
- JP-A- 2012 072 852
- JP-A- 2012 211 676
- JP-A- H10 299 797
- JP-A- S6 170 963
- US-A- 5 093 057
- US-A1- 2003 155 193
- US-A1- 2012 160 616
- US-A1- 2016 195 147

## Description

### TECHNICAL FIELD

The present invention relates to a brake pad for a disc brake.

### BACKGROUND ART

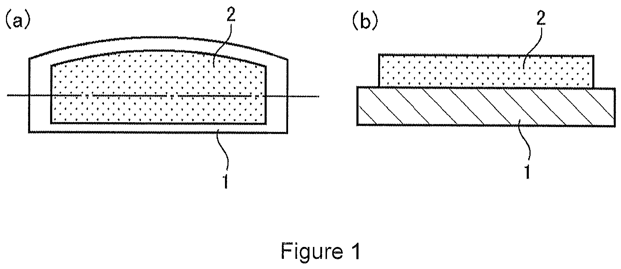

A brake pad used for a disc brake of a vehicle or the like typically includes, as illustrated in Fig. 1, a back plate and a friction material joined to one surface side of the back plate (see Fig. 1).

In the related art, as the back plate, a metal back plate has been widely used. On the other hand, there have been attempts to use a resin as a material of the back plate (Patent Document 1). Also Patent Documents 2-8 suggest the use of a resin as the material of the back plate. However, the structure of the back plates, i. e. the arrangement of the components in the back plates as described in Patent Documents 2-8, still needs to be improved to achieve excellent properties and braking performance.

### RELATED DOCUMENT

### PATENT DOCUMENT

[Patent Document 1] Japanese Unexamined Patent Publication No. 2002-206578
[Patent Document 2] JP 2010 255773 A
[Patent Document 3] JP 2012 072852 A
[Patent Document 4] JP 2012 211676 A
[Patent Document 5] US 5 093 057 A
[Patent Document 6] EP 2 975 287 A1
[Patent Document 7] EP 1 256 741 A2
[Patent Document 8] JP S62181727 U

### SUMMARY OF THE INVENTION

### TECHNICAL PROBLEM

However, in a case where a resin is used as the material of the back plate, the present inventors have found that the following problems are incurred.

When a disc brake is used, the temperature on the friction surface side becomes extremely high, but the temperature on the opposite surface side does not rise compared to the friction surface side. When such an uneven temperature rise and subsequent cooling are repeated, a difference in dimensional change between the friction surface side and the opposite surface side occurs. In a case where such a dimensional change occurs, since a resin back plate has lower rigidity than a metal back plate, "warping" is likely to occur in the entire brake pad. If the brake pad in which warping occurs continues to be used, uneven wear occurs, and there is a concern that problems such as an inability to exhibit sufficient braking performance may be incurred.

### BACKGROUND ART

The present invention has been made in view of such circumstances, and provides a brake pad for a disc brake capable of suppressing warping even if a resin is used as a material of a back plate.

### SOLUTION TO PROBLEM

The present inventors conducted intensive examinations to achieve the object. As a result, it was found that the object can be achieved by a brake pad with the features of independent claim 1. In the brake pad a metal reinforcing material is provided on a surface of a resin back plate formed of a cured product of a thermosetting resin composition opposite to a surface joined to a friction material.

### SOLUTION TO PROBLEM

The present inventors found that, in a brake pad for a disc brake, a back plate is formed of a cured product of a thermosetting resin composition and is reinforced with a metal reinforcing material in order to cope with the above-mentioned problem of "warping".

According to the present invention, there is provided a brake pad for a disc brake according to independent claim 1. Amongst others, the brake pad includes: a resin back plate; a friction material joined to one surface of the resin back plate, in which the resin back plate is formed of a cured product of a first thermosetting resin composition, and a metal reinforcing material provided on a surface of the resin back plate opposite to the surface joined to the friction material.

### ADVANTAGEOUS EFFECTS OF INVENTION

According to the present invention, it is possible to obtain a brake pad for a disc brake capable of suppressing warping even in a case where a resin back plate is used.

### BRIEF DESCRIPTION OF THE DRAWINGS

The above and other objects, advantages and features of the present invention will be more apparent from the following description of certain preferred embodiments taken in conjunction with the accompanying drawings.
Fig. 1 is a schematic view of a structure of a general brake pad, in which (a) of Fig. 1 is a schematic view of the brake pad when seen from a friction material side, and (b) of Fig. 1 is a schematic view of a cross section taken along dash-dotted line in (a) of Fig. 1.
In fig. 2 (a), (b), (c), (d), and (g) are schematic views illustrating various aspects of a brake pad according to an embodiment of the present invention, when seen from a resin back plate side. Further, (e) and (f) in fig. 2 are schematic views of cross sections of reference brake pads.
Fig. 3 is a schematic view illustrating various aspects of reference brake pads. In (a), (b), (c), (f), and (g) of Fig. 3 the brake pads are seen from the resin back plate side, and in (d) and (e) of Fig. 3 cross sections of reference brake pads are shown.
In fig. 4 (b) and (c) are schematic views illustrating various aspects of a brake pad according to an embodiment of the present invention. Further, (a) and (d) of Fig. 4 are schematic views of reference brake pads. In (e) and (f) of Fig. 4 schematic views of brake pads according to the present invention are shown, when seen from the resin back plate side.
Fig. 5 is a schematic view illustrating a method of manufacturing a brake pad.

### DESCRIPTION OF EMBODIMENTS

### <Brake Pad for Disc Brake>

The present invention relates to a brake pad for a disc brake including: a resin back plate; and a friction material joined to one surface of the resin back plate, in which the resin back plate is formed of a cured product of a first thermosetting resin composition, and a metal reinforcing material is provided on a surface of the resin back plate opposite to the surface joined to the friction material.

Hereinafter, embodiments of the brake pad for a disc brake of the present invention will be described. The present invention is not limited to the embodiments described below. Although the present invention will be described in part using the drawings, the drawings are merely schematic for the purpose of description, and dimensional ratios, thicknesses, and the like are not necessarily coincident with those of actual articles. In addition, the numerical range "to" represents being equal to or more than and equal to or less than unless otherwise specified.

### [Resin Back Plate]

The brake pad includes the resin back plate. The resin back plate is formed of the cured product of the first thermosetting resin composition. That is, the resin back plate is obtained by subjecting the first thermosetting resin composition to an appropriate curing treatment (typically, a heating treatment). A method, conditions, and the like of the curing treatment will be described later.

The first thermosetting resin composition may have any form. Typically, the first thermosetting resin composition may be in the form of pellets, granules, tablets, fine particles, or the like.

When the first thermosetting resin composition is in the form of pellets, granules, tablets, or fine particles, the shape of one piece or one particle included in the composition may be any shape, and the size of one piece or one particle is not particularly limited. In a case where the first thermosetting resin composition is in the form of pellets, when the pellet has a plate shape, the pellet has, for example, a size of 1 mm to 30 mm in length and width and a thickness of 0.05 mm to 5 mm, and when the pellet has a ball shape, the pellet has, for example, an average particle size of 3 mm to 50 mm. When the first thermosetting resin composition is in the form of granules, the granule has, for example, an average particle size of 0.5 mm to 5 mm, and when the first thermosetting resin composition is in the form of fine particles, the fine particle has, for example, an average particle size of 0.1 mm to 2 mm. Here, the "average particle size" can be determined by the test sieving method of JIS Z 8815. The average particle size is the particle size at 50% of the integrated value in the particle size distribution (median diameter in cumulative distribution).

Hereinafter, components that can be contained in the first thermosetting resin composition will be described.

### (a) Thermosetting Resin

The first thermosetting resin composition preferably contains a thermosetting resin. The thermosetting resin in the present specification is the concept also including the prepolymer and precursor of the thermosetting resin if not particularly specified.

Examples of the thermosetting resin include a phenol resin, a polyimide resin, a bismaleimide resin, an epoxy resin, a urea resin, a melamine resin, a polyurethane resin, a cyanate ester resin, a silicone resin, an oxetane resin, a (meth) acrylate resin, an unsaturated polyester resin, a diallyl phthalate resin, and a benzoxazine resin. In particular, a phenol resin, a polyimide resin, an epoxy resin, and a bismaleimide resin are preferable, and a phenol resin is more preferable. Accordingly, the resin back plate can exhibit preferable heat resistance as a brake pad.

The thermosetting resin may be used singly or in combination of two or more kinds. In a case of use in combination of two or more kinds, for example, a first phenol resin and a second phenol resin different from the first phenol resin in structure and the like may be combined together. Alternatively, different kinds of resins may be combined.

The phenol resin is not particularly limited as long as the phenol resin includes a structural unit derived from phenol, and examples thereof include: novolac kind phenol resins such as a phenol novolac resin, a cresol novolac resin, a bisphenol A novolac resin, an aryl alkylene kind novolac resin; and resol kind phenol resins such as an unmodified resol phenol resin and an oil-modified resol phenol resin modified with tung oil, linseed oil, or walnut oil. One or a combination of two or more thereof may be used. Among these, as the phenol resin, a phenol novolac resin is particularly preferable. Accordingly, a formed product can be manufactured at a low cost and with high dimensional accuracy, and a back plate which is finally obtained can exhibit particularly excellent heat resistance.

The polyimide resin is not particularly limited as long as the polyimide resin is a resin having an imide bond in the repeating unit, and examples thereof include those obtained by reacting a diamine and to an acid dianhydride and performing on heating and dehydration on the obtained polyamic acid for ring closure.

The diamine is not particularly limited, and examples thereof include: aromatic diamines such as
3,3'-dimethyl-4,4'-diaminodiphenyl,
4,6-dimethyl-m-phenylenediamine, and
2,5-dimethyl-p-phenylenediamine; and siloxane diamines such as 1,3-bis(3-aminopropyl)-1,1,3,3-tetramethyldisiloxane. One or a combination of two or more thereof may be used.

Examples of the acid dianhydride include 3,3'4,4'-biphenyltetracarboxylic acid, pyromellitic acid dianhydride, and 4,4'-oxydiphthalic acid dianhydride. One or a combination of two or more thereof may be used.

Examples of the epoxy resin include: bisphenol kind epoxy resins such as a bisphenol A kind epoxy resin, a bisphenol F kind epoxy resin, and a bisphenol AD kind epoxy resin; novolac kind epoxy resins such as a phenol novolac kind epoxy resin and a cresol novolac kind epoxy resin; brominated epoxy resins such as a brominated bisphenol A kind epoxy resin and a brominated phenol novolac kind epoxy resin; biphenyl kind epoxy resins; naphthalene kind epoxy resins; and tris(hydroxyphenyl)methane epoxy resins. One or a combination of two or more thereof may be used. Among these, as the epoxy resin, particularly, a bisphenol A kind epoxy resin having a relatively low molecular weight, a phenol novolac kind epoxy resin, and a cresol novolac kind epoxy resin are preferable. Accordingly, the flowability of the melt or softened material of the pellets can be enhanced, so that the handleability and the formability (ease of forming) of the melt or softened material of the pellets at the time of manufacturing of the molded product can be further improved. Furthermore, from the viewpoint of further improving the heat resistance of the formed product, as the epoxy resin, a phenol novolac kind epoxy resin and a cresol novolac kind epoxy resin are preferable, and a tris(hydroxyphenyl)methane kind epoxy resin is particularly preferable.

The bismaleimide resin is not particularly limited as long as the bismaleimide resin has a maleimide group at each of both ends of the molecular chain, but a resin having a phenyl group is more preferable. Specifically, for example, a resin represented by Formula (1) can be used. However, the bismaleimide resin may also have a maleimide group bonded to a position other than both ends of the molecular chain.

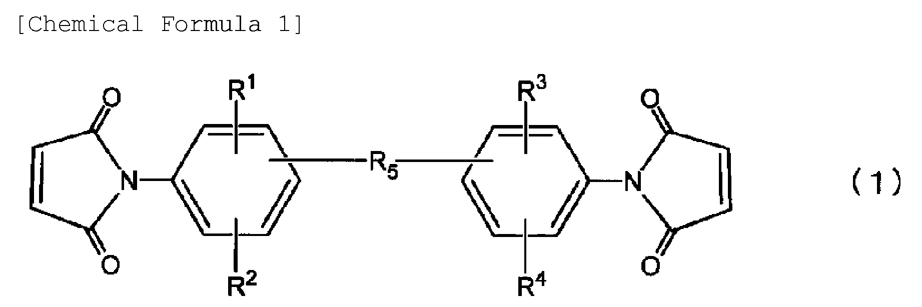

In Formula (1), R¹ to R⁴ are each independently hydrogen or a hydrocarbon group. The hydrocarbon group may be unsubstituted or substituted. The number of carbon atoms of the hydrocarbon group is preferably 1 to 4.

R⁵ is a divalent organic group. Here, the organic group is a hydrocarbon group that may contain a heteroatom, and examples of the heteroatom include O, S, and N. The organic group may be unsubstituted or substituted.

R⁵ is a hydrocarbon group. Preferably, R⁵ is a hydrocarbon group having a main chain in which a methylene group, an aromatic ring, and an ether bond (-O-) are bonded in any order, and more preferably a hydrocarbon group in which the number of methylene groups, aromatic rings, and ether bonds bonded in any order in the main chain is 15 or less. In the middle of the main chain, a substituent and/or a side chain may be bonded, and specific examples thereof include a hydrocarbon group having 3 or less carbon atoms, a maleimide group, and a phenyl group.

Specific examples of the bismaleimide resin include N,N'-(4,4'-diphenylmethane)bismaleimide, bis(3-ethyl-5-methyl-4-maleimidophenyl)methane, and 2,2-bis[4-(4-maleimidophenoxy)phenyl]propane, m-phenylene bismaleimide, p-phenylene bismaleimide, 4-methyl-1,3-phenylene bismaleimide, N,N'-ethylenedimaleimide, and N,N'-hexamethylenedimaleimide. One or a combination of two or more thereof may be used.

The mass average molecular weight of the thermosetting resin is not particularly limited, but is, for example, with respect to the phenol resin, about 1,000 to 15,000 for the phenol novolac resin and about 1,000 to 100,000 for the resol kind phenol resin. By causing the mass average molecular weight to be within this numerical range, appropriate formability (ease of forming) can be obtained. For example, the mass average molecular weight of the thermosetting resin can be measured by gel permeation chromatography (GPC), and defined as a mass molecular weight in terms of polystyrene.

The amount of the thermosetting resin in the first thermosetting resin composition is typically 10 to 98 mass%, preferably 15 to 80 mass%, and more preferably 20 to 60 mass% with respect to the total amount of the first thermosetting resin composition. In particular, in a case where the first thermosetting resin composition contains (b) fibers described later, by setting the amount of the thermosetting resin to this amount, it is easy to obtain an improvement in strength due to a synergistic effect with the fibers.

### (b) Fibers

The first thermosetting resin composition preferably contains fibers. By including the fibers, the mechanical strength of the resin back plate can be enhanced.

Examples of the fibers include: organic fibers such as aramid fibers, acrylic fibers, nylon fibers (aliphatic polyamide fibers), and phenol fibers, inorganic fibers such as glass fibers, carbon fibers, ceramic fibers, rock wool, potassium titanate fibers; and metal fibers such as stainless steel fibers, steel fibers, aluminum fibers, copper fibers, brass fibers, and bronze fibers. Among these, aramid fibers, carbon fibers, and glass fibers are preferable.

Specific examples of glass contained in the glass fibers include E-glass, C-glass, A-glass, S-glass, D-glass, NE-glass, T-glass, and H-glass. Among these, as the glass contained in the glass fibers, E-glass, T-glass, or S-glass is particularly preferable.

Specific examples of the carbon fibers include high strength carbon fibers having a tensile strength of 3500 MPa or more and high elastic modulus carbon fibers having an elastic modulus of 230 GPa or more. The carbon fibers may be any of polyacrylonitrile (PAN)-based carbon fiber and pitch-based carbon fiber, but polyacrylonitrile-based carbon fiber is preferable in terms of high tensile strength. An aramid resin included in the aramid fibers may have any structure of a meta kind structure and a para kind structure.

The fibers are preferably subjected to a surface treatment. Accordingly, the improvement of dispersibility and the improvement of adhesion to the thermosetting resin can be expected.

Examples of the surface treatment method include a coupling agent treatment, an oxidation treatment, an ozone treatment, a plasma treatment, a corona treatment, and a blasting treatment. One or a combination of two or more thereof may be used. Among these, a coupling agent treatment is preferable.

A coupling agent used for the coupling agent treatment is not particularly limited and can be appropriately selected. Specifically, examples thereof include a silane-based coupling agent, a titanium-based coupling agent, and an aluminum-based coupling agent, and one or a combination of two or more thereof may be used. Among these, a silane-based coupling agent is particularly preferable. Accordingly, the adhesion to the thermosetting resin is particularly improved.

Examples of the silane-based coupling agent include an epoxy silane coupling agent, a cationic silane coupling agent, an aminosilane coupling agent, a vinyl silane coupling agent, a mercapto silane coupling agent, a methacryl silane coupling agent, a chlorosilane coupling agent, and an acrylic silane coupling agent.

The cross-sectional shape of the fiber is not particularly limited, and may be any shape such as a substantially circular shape including a circular shape and an oval shape, a polygonal shape including a triangular shape, a different shape including a flat shape and a star-like shape. Among these, a substantially circular shape or a flat shape is particularly preferable. Accordingly, the smoothness of the surface of the resin back plate is improved. In addition, the handleability at the time of forming is further improved, and the formability is further improved.

The average thickness of the fibers is preferably 5 mm or more and 20 mm or less, more preferably 6 mm or more and 19 mm or less, and even more preferably 7 mm or more and 18 mm or less. By causing the average thickness of the fibers to be the lower limit or more, breakage of the fibers at the time of forming of the resin back plate can be sufficiently suppressed. In addition, by causing the average thickness of the fibers to be the upper limit or less, excellent formability can be obtained.

The average fiber length of the fibers is not particularly limited, and is appropriately selected from the viewpoint of the formability of the first thermosetting resin composition, the material of the fibers used, the physical properties required for the resin back plate, and the like. The average fiber length of the fibers is typically 50 mm or more and 20 mm or less in the final resin back plate. The average fiber length is preferably 50 mm or more and 1.5 mm or less as an aspect, 2 mm or more and 19 mm or less as another aspect, and 1 mm or more and 9 mm or less as still another aspect. By causing the average fiber length to be within these numerical ranges, the mechanical strength of the finally obtained formed product can be further improved.

In addition, the average fiber length of the fibers can be obtained, for example, as follows.
(1) The first thermosetting resin composition or the resin back plate is heated at a high temperature (for example, 550°C) using an electric furnace to vaporize the thermosetting resin. 500 fibers are extracted at random.
(2) The fiber length of each of the 500 fibers is measured using a microscope.
(3) The mass of each of the fibers is measured. Alternatively, the mass of each of the fibers is calculated from the apparent mass per unit length of the fiber and the like.
(4) From each of the above values, the mass average fiber length is determined and used as the average fiber length of the fibers.

The fibers may be subjected to an opening treatment. The opening treatment is described, for example, in paragraph 0038 and subsequent paragraphs of Japanese Unexamined Patent Publication No. 2015-163816.

Only one kind of fibers may be used, or two or more kinds of fibers may be used in combination. For example, fibers having a certain average fiber length may be used alone, or two or more kinds of fibers (fiber groups) having different average fiber lengths may be used in combination. In a case of using two kinds of fibers in combination, the combination ratio is preferably in a range of 5:95 to 95:5 by mass ratio. Accordingly, the characteristic of each of the fibers can sufficiently be exhibited. In addition, in a case of using two or more kinds of fibers in combination, as long as the resin back plate finally obtained contains the two or more kinds of fibers, preparation, mixing, preparation, and the like of the two or more kinds of fibers to obtain the resin back plate are not particularly limited. For example, methods such as method 1 and method 2 below may be used, but other methods may also be used.

Method 1: A first thermosetting resin composition in which two or more kinds of fibers are substantially uniformly mixed is prepared, and using this, a resin back plate and a brake pad are produced.

Method 2: A first thermosetting resin composition (x) containing a kind of fiber and a first thermosetting resin composition (y) containing another kind of fiber are separately prepared. Then, before or during forming of a resin back plate, the resin back plate and a brake pad are produced by using these two compositions mixed at a predetermined ratio. For example, a first thermosetting resin composition containing fibers having a relatively long average fiber length and another first thermosetting resin composition containing fibers having a relatively short average fiber length are prepared, and these two compositions are combined and mixed for use before or during forming of a resin back plate.

In a process until the resin back plate is formed, there is a possibility that the fibers may be partially broken and shortened due to pressure or the like. Therefore, it is preferable that the fibers contained in the first thermosetting resin composition are fibers having an average fiber length slightly longer (more specifically, longer by 1% to 100%) than the finally desired average fiber length. For example, in a case where the average fiber length of the fibers in the resin back plate is set to 50 mm or more and 1.5 mm or less, the average fiber length of the fibers contained in the first thermosetting resin composition is preferably set to 100 mm or more and 1.5 mm or less. Similarly, in a case where the average fiber length of the fibers in the resin back plate is set to 2 mm or more and 19 mm or less, the average fiber length of the fibers contained in the first thermosetting resin composition is preferably set to 3 mm or more and 20 mm or less, and in a case where the average fiber length of the fibers in the resin back plate is set to 1 mm or more and 9 mm or less, the average fiber length of the fibers contained in the first thermosetting resin composition is preferably set to 1 mm or more and 10 mm or less.

The amount of the fibers in the first thermosetting composition (in a case where a plurality of kinds of fibers are contained, the total amount of the fibers) is 20 to 90 mass%, and preferably 30 to 80 mass% with respect to the total amount of the first thermosetting resin composition. By causing the amount to be within this range, the strength of the resin back plate can be improved by the synergistic effect with the (a) thermosetting resin, and good formability can also be obtained.

### (c) Other Components

The first thermosetting resin composition may further contain, as necessary, a curing agent, a curing aid, a filler, a release agent, a pigment, a sensitizer, an acid proliferating agent, a plasticizer, a flame retardant, and a stabilizer, an antioxidant, an antistatic agent, and the like.

The curing agent can be appropriately selected and used depending on the kind of the above-mentioned thermosetting resin and the like, and is not limited to a specific compound. In a case where a phenol resin is used as the thermosetting resin, as the curing agent, a di- or higher functional epoxy compound, an isocyanate, hexamethylenetetramine, or the like can be used. In a case where an epoxy resin is used as a thermosetting resin, as the curing agent, an amine compound such as an aliphatic polyamine, an aromatic polyamine, and dicyandiamide, an acid anhydride such as an alicyclic acid anhydride and an aromatic acid anhydride, a polyphenol compound such as a novolac kind phenol resin, an imidazole compound, or the like can be used. Among these, from the viewpoint of handling workability and the environment, it is preferable to select a novolac kind phenol resin.

In particular, in a case of using a phenol novolac kind epoxy resin, a cresol novolac kind epoxy resin, and a tris(hydroxyphenyl)methane kind epoxy resin as the epoxy resin, it is preferable to select and use a novolac kind phenol resin as the curing agent. Accordingly, the heat resistance of a formed product can be improved.

In a case of using the curing agent, the amount thereof is preferably 0.1 mass% or more and 30 mass% or less with respect to the total amount of the first thermosetting resin composition. Accordingly, the resin back plate can be easily formed into an any shape.

The curing aid is not particularly limited, and examples thereof include an imidazole compound, a tertiary amine compound, and an organic phosphorus compound. In a case of using the curing aid, the amount is preferably 0.001 mass% or more and 10 mass% or less with respect to the total amount of the first thermosetting resin composition. Accordingly, the first thermosetting resin composition can be more easily cured, and the resin back plate can be more easily formed.

The filler is not particularly limited, and may be an inorganic filler, an organic filler, or the like. Examples of the inorganic filler include calcium carbonate, clay, silica, mica, talc, wollastonite, glass beads, milled carbon, and graphite. The inorganic filler may be used in combination of two or more kinds. Examples of the organic filler include polyvinyl butyral, acrylonitrile butadiene rubber, pulp, and wood powder. The organic filler may be used singly or in combination of two or more kinds. In a case of using the filler, the amount thereof is preferably 1 mass% or more and 30 mass% or less with respect to the total amount of the first thermosetting resin composition. Accordingly, the mechanical strength of the resin back plate can be further improved.

The release agent is not particularly limited, and zinc stearate, calcium stearate, or the like can be used. In a case of using the release agent, the amount thereof is preferably 0.01 mass% or more and 5.0 mass% or less with respect to the total amount of the first thermosetting resin composition. Accordingly, the resin back plate can be easily formed into an any shape, and sufficient releasability can be obtained.

The components that can be contained in the first thermosetting resin composition have been described above. A method of manufacturing the resin back plate using the first thermosetting resin composition and a method of manufacturing the brake pad will be described later.

The properties, form, and the like of resin back plate are supplemented.

### · Flexural Modulus

The brake pad has the resin back plate reinforced with the metal reinforcing material. However, the resin back plate itself preferably has a certain degree of hardness (is less likely to bend) . Accordingly, the problem of warping can be further reduced, and the metal reinforcing material can be reduced in amount, which contributes to a reduction in the weight of the entire brake pad. Specifically, the flexural modulus of the cured product of the first thermosetting resin composition forming the resin back plate is preferably 5 GPa or more and 100 GPa or less, and more preferably 10 GPa or more and 80 GPa or less.

The flexural modulus is measured according to ISO 178. Specifically, a portion having a size of length 80 mm × width 10 mm × thickness 6 mm with respect to an advancing direction of the disc brake (a direction in which the frictional force is applied when the brake pad is actually used) is cut from the central portion of the resin back plate to prepare a test piece for measuring the flexural strength, and the flexural strength is measured at room temperature.

### · Thickness of Resin Back Plate

The thickness of the resin back plate is usually 1 mm to 30 mm, preferably 2 mm to 20 mm, and more preferably 3 to 15 mm.

### [Friction Material]

The brake pad includes the friction material joined to one surface of the resin back plate. The friction material has a function of coming into contact with a disc at the time of braking and thus suppressing the rotation of a disc by the friction due to the contact. The friction material preferably has excellent heat resistance so as to cope with the frictional heat at the time of braking.

An aspect of the friction material is a cured product of a second thermosetting resin composition. The second thermosetting resin composition preferably contains a thermosetting resin, a fiber material, a filler, and the like.

Examples and preferable aspects of the thermosetting resin contained in the second thermosetting resin composition include (a) the thermosetting resin described in the first thermosetting resin composition. Among these, a phenol resin is preferable from the viewpoint of joining properties to the resin back plate.

In addition, it is preferable that the thermosetting resin contained in the first thermosetting resin composition and the thermosetting resin contained in the second thermosetting resin composition contain the same or the same kind of thermosetting resin. That is, in the manufactured brake pad, it is preferable that the compositions are selected so that the cured product of the first thermosetting resin composition and the cured product of the second thermosetting resin composition contain the same or the same kind of thermosetting resin. In other words, it is preferable that (i) the cured product of the first thermosetting resin composition and the cured product of the second thermosetting resin composition contain the same thermosetting resin, or (ii) the cured product of the first thermosetting resin composition and the cured product of the second thermosetting resin composition each contain the same kind of resin. Here, "contain the same kind of resin" means that a resin in the same classification of resins classified by the structure, basic skeleton, and the like of raw material monomers. For example, an aspect in which the cured product of the first thermosetting resin composition contains phenol resin 1 and the cured product of the second thermosetting resin composition contains phenol resin 2 which is different in structure, molecular weight, and the like from phenol resin 1 but is generally classified into a phenol resin corresponds to (ii) described above.

By selecting the thermosetting resin contained in the cured product of the first thermosetting resin composition and the thermosetting resin contained in the cured product of the second thermosetting resin composition as described above, the improvement of the joining properties (joining strength) between the resin back plate and the friction material is expected. In particular, in a case where the brake pad is manufactured by integral molding, which will be described later, it is considered that integral molding is easy and the resin back plate and the friction material are more firmly joined to each other.

Examples of the fiber material used in the friction material include rock wool, aramid fiber (Kevlar (trademark)), copper fiber, and potassium titanate fiber. Examples of the filler include barium sulfate, zirconium silicate, cashew dust, graphite, and acrylonitrile butadiene rubber (NBR) powder.

The average thickness of the friction material is not particularly limited, but is preferably 3 mm to 30 mm, and more preferably 5 mm to 20 mm.

### [Metal Reinforcing Material]

The brake pad includes the metal reinforcing material provided on the surface of the resin back plate opposite to the surface joined to the friction material. By the rigidity of the metal reinforcing material, the effect of suppressing warping of the brake pad is obtained.

From the viewpoint of securing the strength for suppressing warping, the metal reinforcing material itself preferably has a certain degree of rigidity. The metal reinforcing material is preferably not a member having low rigidity, such as steel wool.

### · Shape

The metal reinforcing material is at least one kind of metal reinforcing material selected from the group consisting of a plate material, a mesh material, and a bar material. The "plate material, "bar material", and "mesh material" are understood to mean as commonly used by those skilled in the art to which the present invention belongs, but mean, for example, the following.

Plate material: When it is assumed that the surface of the resin back plate opposite to the surface joined to the friction material is an upper surface and the area of the upper surface is S, a metal reinforcing material has an area of S/2 or more when seen in a plan view. Here, in a case where a plurality of metal reinforcing materials is used for a single brake pad, the area herein means not the total area but the area of each of the metal reinforcing materials.

Bar material: When the metal reinforcing material is seen in a plan view with the surface of the resin back plate opposite to the surface joined to the friction plate as an upper surface, when it is assumed that the length in the longitudinal direction of the metal reinforcing material is L and the length in the lateral direction of the metal reinforcing material is D, a metal reinforcing material having an L/D value (aspect ratio) of 10 or more and 200 or less. In a case where a plurality of metal reinforcing materials which are not fixed to each other is used for a single brake pad, the aspect ratio is determined for each of the metal reinforcing materials.

Mesh material: A metal reinforcing material having a plurality of elongated metals which are woven, knitted, or arranged in a well shape (symbol # shape) and fixed together by adhesion, welding, or the like, or a flat plate-shaped metal reinforcing material having regular (periodic) through-holes over the entire surface.

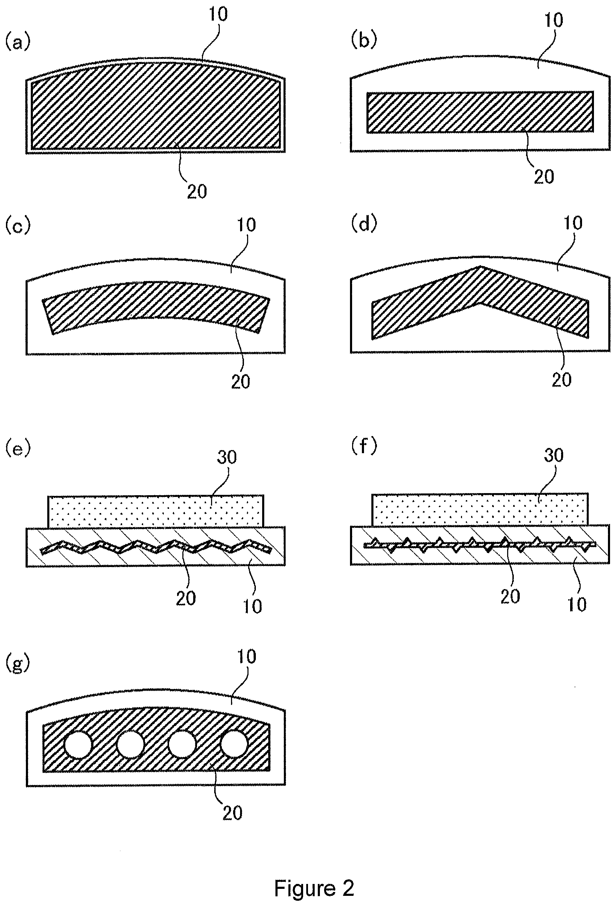

As an aspect, the plate material (metal reinforcing material 20) is formed in substantially the same shape as the resin back plate 10 ((a) of Fig. 2), but may also have various forms as long as the plate material exhibits the function of preventing warping of the resin back plate. For example, the plate material (metal reinforcing material 20) may have a substantially rectangular form ((b) of Fig. 2), a curved or bent form ((c) and (d) of Fig. 2), a wavy form ((e) of Fig. 2), a form having uneven portions, protrusions, or the like on the surface of the plate material ((f) of Fig. 2), or a form having openings in portions of the plate material ((g) of Fig. 2) . In addition, the thickness, width, and the like of the plate material may not be constant, and for example, the thickness of a portion considered to be intensively subjected to the force of warping may be increased. As a matter of course, the present invention is not limited to only these forms.

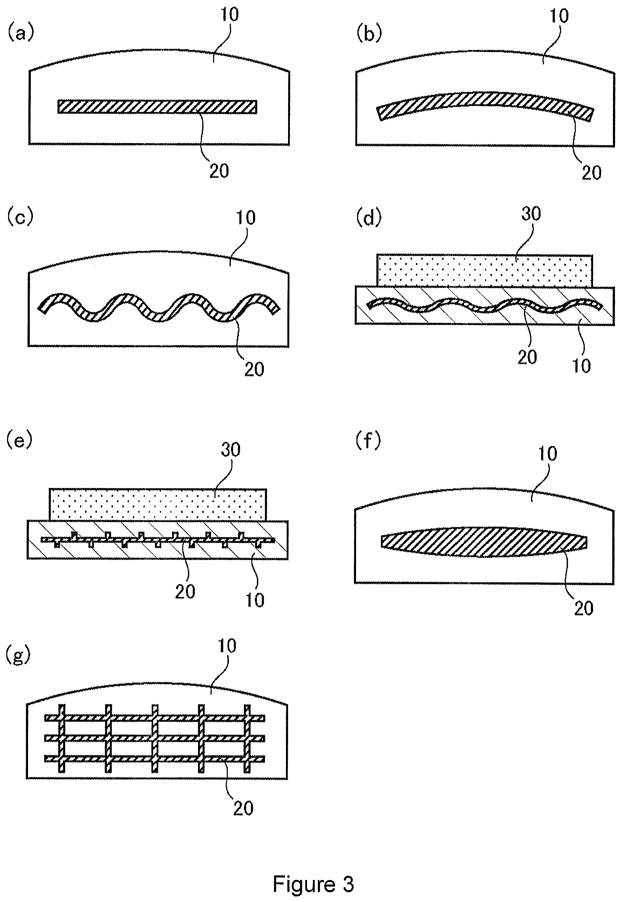

The bar material (metal reinforcing material 20) is not limited to an aspect of a straight and uniform bar material ((a) of Fig. 3), and may have various forms as long as the bar material exhibits the function of preventing warping of the resin back plate . For example, the bar material may have a bent or wavy form ((b), (c), and (d) of Fig. 3), or a form provided with uneven portions, protrusions, or the like on the surface of the bar material ((e) of Fig. 3). In addition, the thickness of the bar material (the metal reinforcing material 20) may not be constant ((f) of Fig. 3). Furthermore, the bar material may be hollow. Moreover, as the bar material, a plurality of bar materials (metal reinforcing materials 20) in a form arranged vertically and horizontally are included ((g) of Fig. 3) .

Like the plate material, the mesh material may have various forms . That is, the mesh material may have substantially the same shape as the resin back plate, a substantially rectangular form, a curved or bent form, a wavy form, a form having additional uneven portions, protrusions, or the like on the surface, a form having holes in portions ("holes" mentioned here are not holes originally provided in the mesh but large holes intentionally provided in the mesh), or the like. In addition, the thickness, width, and the like of the mesh material may not be constant, and for example, the thickness of a portion considered to be intensively subjected to the force of warping may be increased. As a matter of course, the present invention is not limited to only these forms.

In a case where the metal reinforcing material is a plate material or a mesh material, the thickness thereof (in a case where the thickness is not uniform, average thickness, the same applies hereinafter) is preferably 0.5 mm or more, more preferably 1 mm or more, and even more preferably 2 mm or more, and particularly preferably 3 mm or more. Accordingly, a sufficient warping preventing effect can be obtained. Moreover, the thickness of the plate material or the mesh material is preferably 8 mm or less, more preferably 7 mm or less, and even more preferably 6 mm or less. From another viewpoint, the thickness of the plate material or the mesh material is preferably 50% or more, more preferably 40% or less, and even more preferably 30% or less with respect to the thickness of the back plate. By reducing the thickness of the reinforcing material within the range in which the effect of preventing warping can be obtained, a reduction in the weight of the entire brake pad can be realized.

In a case where the metal reinforcing material is a bar material, the thickness of the bar material is preferably 2 mm or more, and more preferably 4 mm or more. In addition, the thickness of the bar material is preferably 8 mm or less, and more preferably 6 mm or less. Here, the "thickness" of the bar material refers to the average thickness in a case of a bar having an uneven thickness. In a case where the cross-sectional shape thereof is not a circle, the thickness is determined based on the diameter of a circle having the same area as the cross-sectional area. By increasing the thickness of the bar material to a certain extent, a sufficient warping preventing effect can be obtained. By reducing the thickness of the bar material within the range in which the effect of preventing warping can be obtained, a reduction in the weight of the entire brake pad can be realized.

From still another viewpoint, the bar material has a dimension of at least 2 mm or more, and more preferably a dimension of at least 4 mm or more in the thickness direction of the resin back plate. Accordingly, a sufficient warping preventing effect can be obtained. The dimension of the bar material in the thickness direction of the resin back plate is preferably 8 mm or less, and more preferably 6 mm or less. By increasing the dimension to a certain extent, a sufficient warping preventing effect can be obtained. By reducing the dimension within the range in which the effect of preventing warping can be obtained, a reduction in the weight of the entire brake pad can be realized.

### • Area

In the metal reinforcing material, as an aspect, when it is assumed that the surface of the resin back plate opposite to the surface joined to the friction material is the upper surface and the area of the upper surface is S, the area of the metal reinforcing material, when seen in a plan view, is S/2 or more. The area is more preferably 2S/3 or more, and more preferably 3S/4 or more. By causing the area to be this value or more, the effect of suppressing warping is increased. The upper limit of the area of the metal reinforcing material is typically S (that is, the same area as the area of the resin back plate), but may be larger than S (for example, may be 1.5S). This means that an aspect in which, for example, the metal reinforcing material covers the entirety of the surface of the resin back plate joined to the friction plate and a portion of the metal reinforcing material protrudes from the resin back plate may be adopted. When a plurality of metal reinforcing materials are used, the area of the sum thereof is preferably within the numerical value range.

### · Position and arrangement of metal reinforcing material

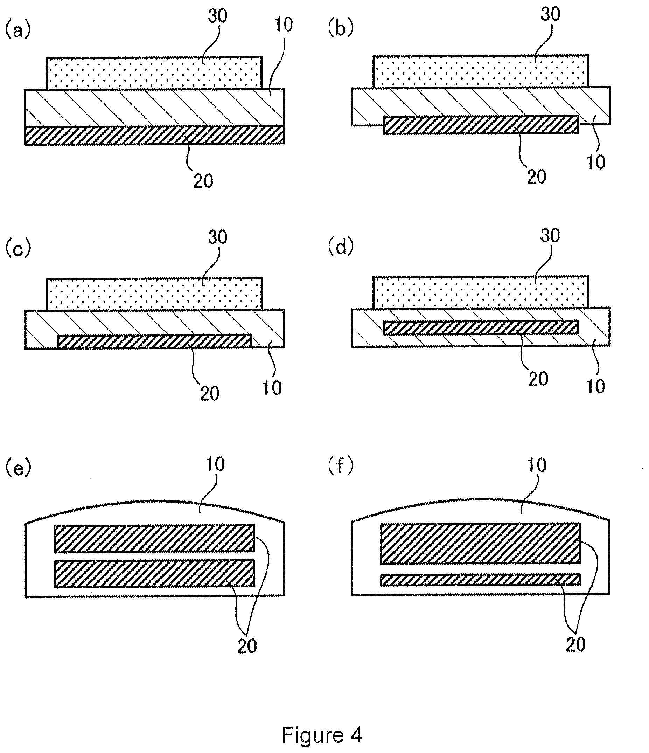

The metal reinforcing material is provided on the surface of the resin back plate opposite to the surface joined to the friction material. More specifically, for example, there are the following aspects.
Reference Aspect 1: An aspect in which only one surface of the metal reinforcing material 20 is in contact with the resin back plate 10, and the other surface is not in contact with the resin back plate 10 ((a) of Fig. 4)
Inventive Aspect 2: An aspect in which a portion of the metal reinforcing material 20 is embedded in the resin back plate 10, and a portion of the surface of the metal reinforcing material 20 is exposed ((b) and (c) of Fig. 4)
Reference Aspect 3: An aspect in which the metal reinforcing material 20 is embedded in the resin back plate 10 ((d) of Fig. 4)

In inventive aspect 2, the metal reinforcing material is in a form of biting into the resin back plate. In other words, there is sticking between the metal reinforcing material and the resin back plate. Such a structure is expected to be strong against a force in the lateral direction compared to reference aspect 1 and to effectively prevent the metal reinforcing material from being peeled away from the resin back plate. In reference aspect 3, the metal reinforcing material is not in contact with the air or the like and an effect of preventing corrosion of the metal reinforcing material can be expected.

It is preferable that the metal reinforcing material is not in contact with the friction material. In addition, it is preferable that the metal reinforcing material is disposed as far as possible from the friction material. With such an arrangement, in addition to the improvement of rigidity by reinforcement of the metal reinforcing material, an effect of suppressing the temperature rise of a brake fluid can be expected by the thermal insulation by the resin. This is described more quantitatively as follows . In the following, the "back plate" refers to a portion where the resin back plate and the metal reinforcing material are combined.

### (i) General Case (in Case Where Back Plate Has Uneven Portions or The Like and Thickness Thereof Is Not Constant)

When it is assumed that at a point on the surface of the back plate opposite to the surface joined to the friction material, the thickness (local thickness) of the back plate at the point is T, the metal reinforcing material is not present at a depth of T/2 or more from the surface opposite to the surface joined to the friction material at the point.

### (ii) Special Case Of (i) (in Case Where Back Plate Has Flat Plate Shape Having Constant Thickness)

When it is assumed that a constant thickness of the back plate is T₁, the metal reinforcing material is not present in a region deeper than T₁/2 from the surface opposite to the surface joined to the friction material and the entire metal reinforcing material is present in a region from the surface opposite to the surface joined to the friction material to a depth of T₁/2.

For example, reference aspect (a) and inventive aspect (c) in Fig. 4 correspond to special cases of (ii). In addition, the inventive aspect (b) of Fig. 4 corresponds to a general case of (i) although the thickness of the back plate is not uniform. On the other hand, in the aspects of (d), (e), and (d) of Fig. 3, at least a portion of the metal reinforcing material 20 is present in a region closer to the friction material 30 than the half of the thickness of the back plate and thus the aspects are not preferable from the viewpoint that the metal reinforcing material is separated from the friction plate. However, as described above, these are preferable aspects from the viewpoint of preventing corrosion of the metal reinforcing material and are not excluded from the present invention.

In addition, it can be said that aspect 1 or 2 described above is preferable even from the viewpoint that the metal reinforcing material can be easily disposed apart from the friction material.

A plurality of metal reinforcing materials may be used. For example, two or more plate materials may be used ((e) of Fig. 4), or a combination of plate materials and bar materials may be used ((f) of Fig. 4).

### · Kind of Metal

The kind of metal (material) is not particularly limited. For example, the kind of metal is selected from iron, stainless steel, aluminum, titanium, copper, and various alloys in consideration of durability, reliability, and the like as a brake pad. Among these, iron and stainless steel are preferable from the viewpoint of availability, cost, and the like. From the viewpoint of weight reduction, light metals such as aluminum and titanium are preferable.

### · Young's modulus

The Young's modulus of the metal forming the metal reinforcing material is preferably larger than the Young' s modulus of the cured product of the first thermosetting resin composition forming the resin back plate. Accordingly, a further increase in the effect of suppressing warping can be expected. The Young' s modulus of the metal forming the metal reinforcing material is preferably 30 to 250 GPa, and more preferably 50 to 220 GPa. In addition, the Young's modulus of a metal material is measured at room temperature, after preparing a suitable test piece, for example, based on the metal material tension test method defined in JIS Z 2241. In addition, the Young's modulus of the resin is measured at room temperature after preparing a suitable test piece, for example, based on the method defined in JIS 7162.

### · Surface Treatment of Metal Reinforcing Material

It is preferable that the metal reinforcing material is subjected to a surface treatment to increase the joining force to the resin back plate. Preferable examples of the surface treatment include a roughening treatment, a treatment with an adhesive, and a treatment with a primer. Two or more of these treatments may be performed.

When a roughening treatment, that is, a treatment for forming fine uneven portions on the surface of the metal reinforcing material, the thermosetting resin composition intrudes into the uneven portions, so that the joining strength to the resin back plate can be increased. Examples of a method of the roughening treatment include a method of physically and mechanically roughening the surface, and a chemical surface treatment method. In order to form fine uneven portions, it is preferable to perform a chemical surface treatment. This is described, for example, in WO2014/061521.

The chemical surface treatment will be described.

### · Surface Treatment Agent

A surface treatment agent is appropriately selected depending on the material of the metal reinforcing material. In a case where the material of the metal reinforcing material is iron or stainless steel, an aqueous solution in which an inorganic acid, a chlorine ion source, a cupric ion source, and a thiol-based compound are combined as necessary is preferable. In a case where the material of the metal reinforcing material is aluminum or an aluminum alloy, an aqueous solution in which an alkali source, an amphoteric metal ion source, a nitrate ion source, and a thiol compound are combined as necessary is preferable. In a case of magnesium or a magnesium alloy, an alkali source is used, and an aqueous solution of sodium hydroxide is particularly preferable.

In a case where the material of the metal reinforcing material is copper or a copper alloy, an aqueous solution using at least one selected from inorganic acids such as nitric acid and sulfuric acid, organic acids such as unsaturated carboxylic acid, persulfates, hydrogen peroxide, azoles including imidazoles and derivatives thereof, tetrazoles and derivatives thereof, aminotetrazoles and derivatives thereof, and aminotriazoles and derivatives thereof, pyridine derivatives, triazines, triazine derivatives, alkanolamines, alkylamine derivatives, polyalkylene glycols, sugar alcohols, cupric ion sources, chlorine ions sources, phosphonic acid-based chelating agent oxidizing agent, and N,N-bis(2-hydroxyethyl)-N-cyclohexylamine is preferable.

### · Method of surface treatment

The metal reinforcing material is immersed in the surface treatment agent such that the metal surface is subjected to a chemical treatment. At this time, the treatment temperature is, for example, 30°C. The treatment time is appropriately determined depending on the material and surface condition of the metal reinforcing material to be selected, the kind, concentration, and the like of the surface treatment agent, the treatment temperature, and the like, but is, for example, 30 to 300 seconds. At this time, the etching amount in the depth direction of the metal reinforcing material is preferably set to 3 mm or more, and more preferably 5 mm or more. The etching amount in the depth direction of a metal member can be calculated from the mass, specific gravity, and surface area of the dissolved metal reinforcing material and evaluated. The etching amount in the depth direction can be adjusted by the kind and concentration of the surface treatment agent, the treatment temperature, the treatment time, and the like.

Thereafter, the metal reinforcing material is subjected to a post-treatment. First, the surface of the metal reinforcing material is washed with water and dried. Next, the surface of the metal reinforcing material is treated with an aqueous solution of nitric acid or the like.

### · Specific Surface Area

In a case where the metal reinforcing material is subjected to the roughening treatment, the specific surface area of at least the surface joined to the resin back plate is typically 100 or more, and preferably 150 or more. In addition, the upper limit of the specific surface area is typically 400 or less, preferably 380 or less, and more preferably 300 or less. By satisfying these numerical value conditions, the joining strength can be improved.

The specific surface area refers to the ratio of the actual surface area according to the nitrogen adsorption BET method to at least the apparent surface area of the joint surface joined to the resin back plate. The apparent surface area means the surface area under the assumption that the surface of the metal reinforcing material is smooth with no uneven portion. On the other hand, the actual surface area according to the nitrogen adsorption BET method means the BET surface area determined by the amount of nitrogen adsorbed and desorbed. For example, the amount of nitrogen adsorbed and desorbed at a liquid nitrogen temperature is measured for a vacuum-dried measurement object sample using the automatic specific surface area/pore size distribution measurement instrument (BELSORP-miniII, manufactured by MicrotracBEL Corp.), and the actual surface area can be calculated based on the amount of nitrogen adsorbed and desorbed.

The reason that the joining strength is excellent when the specific surface area is within the above range is not necessarily clear. However, it is considered that the uneven portions on the metal surface have a structure just enough for the thermosetting resin composition to penetrate and exhibit the anchoring effect.

### · Surface Roughness

The surface roughness Ra of the joint surface of the metal reinforcing material to the resin back plate is preferably 1.0 mm or more and 40.0 mm or less, more preferably 1.0 mm or more and 20.0 mm or less, and particularly preferably 1.0 mm or more and 10.0 mm or less. The joining strength can be further improved when the surface roughness Ra is within this numerical value range. The ten-point mean roughness Rz of the joint surface of the metal reinforcing material to the resin back plate is preferably 1.0 mm or more and 40.0 mm or less, and more preferably 5.0 mm or more and 30. 0 mm or less. The joining strength can be further improved when the surface roughness Ra is within this numerical value range. In addition, Ra and Rz can be measured according to JIS-B 0601.

Examples of the treatment with an adhesive and the treatment with a primer include a treatment with a known adhesive or primer that enhances the joining properties between metal and resin. As the adhesive and the primer, those based on an epoxy resin are preferably used.

### [Brake Pad]

As a result of suppression of warping, the brake pad can suppress uneven wear, and as a result, can exhibit sufficient braking performance. In addition, a reduction in uneven wear can also contribute to a reduction of so-called "squeal" of the brake.

In the brake pad, the specific gravity of the brake pad as a whole is preferably 0.8 or more and 5. 0 or less, more preferably 0.9 or more and 4.0 or less, and even more preferably 1.0 or more and 3.0 or less. By adjusting the material and the amount of use of the metal reinforcing material so as to fall within this range, in addition to the effect of preventing warping, a reduction in the weight of the brake pad and the consequent improvement of the fuel efficiency of the vehicle can be expected.

The brake pad includes the resin back plate, the friction material, and the metal reinforcing material described above, but may include other layers and accessories. For example, an additional structure for fixing the brake pad, an auxiliary layer for improving the joining properties of each member, and the like may be provided. Furthermore, the resin back plate or the friction material may be formed in a plurality of layers.

### <Method of Manufacturing Brake Pad for Disc Brake>

The method of manufacturing the brake pad is not particularly limited, and for example, the brake pad is manufactured by the method described in (1) to (3) below.

### (1) Manufacturing Method by Integral Molding

For example, the brake pad provided with the resin back plate, the friction material, and the metal reinforcing material can be obtained by the following steps:
(i) disposing a forming material 200 of the friction material in a mold 100;
(ii) disposing a first thermosetting resin composition 300 in the mold 100;
(iii) disposing a metal reinforcing material 400 in the mold 100; and
(iv) collectively applying heat and pressure to the disposed object (the forming material 200 of the friction material, the first thermosetting resin composition 300, and the metal reinforcing material 400) disposed in the mold 100.

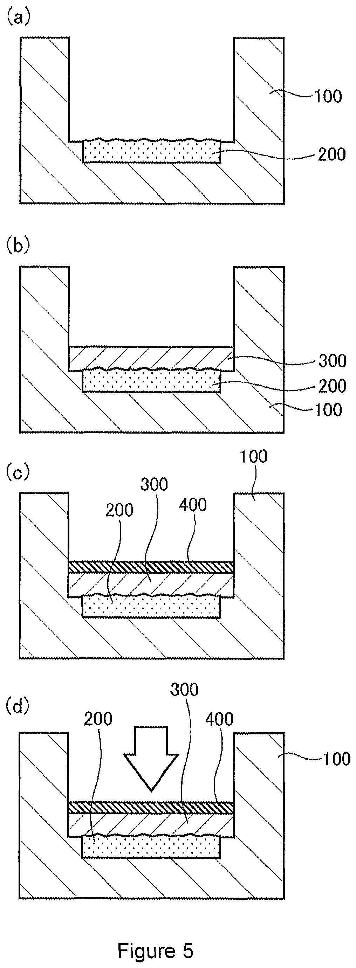

In addition, (i) to (iv) respectively correspond to (a) to (d) of Fig. 5.

These steps are preferably performed in the order of (i) to (iv) . In step (i), the forming material of the friction material is typically the second thermosetting resin composition described above.

In a case where the forming material of the friction material or the first thermosetting resin composition is in the form of pellets, granules, tablets, or fine particles, a step of adjusting the surface of the disposed object may be provided between steps (i) and (ii) and/or steps (ii) and (iii) . This adjusting method is typically adjustment into a flat form but may also be adjustment into a certain three-dimensional shape (for example, an uneven shape) . Through the adjustment, the joining area is increased, and an increase in the joining force can be expected.

In step (i), the forming material of the friction material may be preformed before being disposed in the mold. That is, the forming material of the friction material (typically the second thermosetting resin composition) may be preformed by being compressed for example, under conditions of room temperature (15°C to 30°C), a pressure of 1 to 100 Mpa, and a time of 1 to 120 seconds, and may be thereafter disposed in the mold. Similarly, in step (ii), the first thermosetting resin composition may be preformed before being disposed in the mold. The conditions for preforming are the same as described above.

In step (iii), the metal reinforcing material is disposed so that the metal reinforcing material is at a desired position in the finally obtained brake pad. At this time, the metal reinforcing material is preferably subjected to the above-described surface treatment (the roughening treatment, the treatment with an adhesive, the treatment with a primer, or the like) . The surface treatment is preferably performed on at least a portion of the metal reinforcing material in contact with the first thermosetting resin composition.

In addition, when a reference brake pad having the metal reinforcing material embedded in the resin back plate is to be manufactured, a step of further disposing the first thermosetting resin composition is preferably performed between steps (iii) and (iv). In this case, as illustrated in (d) of Fig. 4 described above, the brake pad having the metal reinforcing material embedded in the resin back plate can be obtained by integral molding.

The temperature, pressure, time, and the like of step (iv) are not particularly limited, but the temperature is typically 140°C to 200°C, and preferably 150°C to 190°C. The pressure is also not particularly limited, but is typically 5 to 100 MPa, and preferably 10 to 80 MPa. The time is also not particularly limited, but is typically 1 to 10 minutes. These conditions are appropriately set based on the curability and the like of the first and second thermosetting resin compositions.

### (2) Manufacturing Method in Which Members Are Formed Separately and Thereafter Joined

In this method, first, a resin back plate, a friction material, and a metal reinforcing material having a desired shape are formed. Examples of the method include compression molding, transfer molding, and injection molding. By compression molding, in particular, in a case where the first and/or second thermosetting resin composition contains fibers, the degree of orientation of the fibers can be reduced and thus anisotropy can be reduced. The conditions for compression molding are substantially the same as in step (iv) of (1) described above. On the other hand, by transfer molding, the dimensions can be controlled with higher accuracy. Therefore, transfer molding is suitable for manufacturing of complex shapes. Moreover, by injection molding, mass productivity can be improved. A brake pad can be obtained by joining the resin back plate, the friction material, and the metal reinforcing material obtained as described above using a suitable adhesive (for example, an epoxy adhesive).

### (3) Manufacturing Method in Which Some Members Are Joined by Integral Molding, and The Remaining Members Are Thereafter Joined

For example, in (1) manufacturing method by integral molding, the brake pad may be obtained by obtaining a structure having the friction material the resin back plate joined together by performing steps (i), (ii), and (iv) without performing step (iii) and thereafter adhering the metal reinforcing material thereto with an adhesive or the like.

Alternatively, in (1) manufacturing method by integral molding, the brake pad may be obtained by obtaining a structure having the resin back plate and the metal reinforcing material joined together by performing steps (ii) to (iv) without performing step (i) and thereafter adhering the friction material thereto with an adhesive or the like.

The brake pad is preferably manufactured by (1) integral molding described above. This is because the overall manufacturing process can be simplified. Furthermore, although the details are not clear, it is considered that in the brake pad obtained by integral molding, the interface between the members is complexly entangled and hardened at the molecular level and thus the joining force between the members becomes stronger. In particular, as described above, in (iii) the step of disposing the metal reinforcing material in the mold, it is preferable to use a metal reinforcing material subjected to a surface treatment as the metal reinforcing material. Accordingly, it is considered that the resin back plate and the metal reinforcing material are more strongly joined, and thus a reduction in the degree of "peeling" between the resin back plate and the metal reinforcing material can be expected compared to a case of typical bonding without integral molding.

### [Examples]

Hereinafter, the present invention will be described using examples. The present invention is not limited to the form of the examples, and modifications, improvements, and the like in a range in which the obj ect of the present invention can be achieved are included in the present invention.

### [Example 1]

### (1) Preparation of First Thermosetting Resin Composition

First, as the raw fiber for the fibers, glass fiber (Glass Fiber Roving 1084 manufactured by PPG Industries Inc., average diameter: 15 mm) subjected to a surface treatment by a silane coupling agent was prepared.

Next, 36.0 mass% of a phenol resin (SUMILITERESIN PR-51470 manufactured by Sumitomo Bakelite Co., Ltd., weight average molecular weight: 2800) as a thermosetting resin, 6.0 mass% hexamethylenetetramine as a curing agent, 1.0 mass% of magnesium oxide as a curing aid, 1.0 mass% of calcium stearate as a release agent, and 1.0 mass% of carbon black as a pigment were mixed to obtain a resin mixture.

Then, using the fluid bed technology, the obtained resin mixture was coated so as to cause the glass fiber subjected to the surface treatment to occupy 55 mass%, was melted and fixed by a heater heated to 400°C, and was thereafter cooled.

Thereafter, the glass fiber coated with the resin mixture was cut by a strand cutter so as to obtain fiber having an average length of 20 mm. Accordingly, a pellet-like first thermosetting resin composition was obtained.

### (2) Preparation of Second Thermosetting Resin Composition (Forming Material of Friction Material)

The same phenol resin as the above first thermosetting resin composition, and the other fiber material, filler, and the like which are known are appropriately mixed to obtain a second thermosetting resin composition.

### (3) Preparation of Metal Reinforcing Material

A metal reinforcing material which was made of stainless steel, had a thickness of 2 mm, and had substantially the same shape as that of the finally formed resin back plate, and had a surface subjected to a chemical treatment (roughening) with reference to the method described in WO2014-061521 was prepared.

### (4) Integral Molding

The brake pad was manufactured according to the procedure illustrated in Fig. 5. That is, first, a suitable mold was prepared, and the second thermosetting resin composition (forming material of the friction material) of (2) described above was disposed in the mold ((a) of Fig. 5). The first thermosetting resin composition of (1) described above was disposed thereon ((b) of Fig. 5). The metal reinforcing material of (3) described above was disposed thereon ((c) of Fig. 5). Thereafter, the disposed object disposed in the mold was subjected to heating and pressurization at a temperature of 160°C and a pressure of 20 MPa for 5 minutes ((d) of Fig. 5) . The brake pad was obtained by this series of steps.

### (5) Performance Evaluation

The following evaluations were conducted as simulated evaluations.

First, using a three-dimensional measuring device, the amount of warping of the brake pad obtained by (4) integral molding described above was measured.

Thereafter, the brake pad was set on a heating plate heated to 500°C so that the friction plate side was in contact with the heating plate. Then, after placing a 1 kg weight on the brake pad and leaving the brake pad to stand for 90 minutes, the brake pad was cooled.

After the cooling, the amount of warping of the brake pad was measured again using the three-dimensional measuring device. From the measurement results, it was confirmed that the occurrence of warping that could cause uneven wear was sufficiently suppressed.

### [Example 2]

In Example 1, a brake pad was prepared in the same manner as in Example 1 except that the glass fiber contained in the first thermosetting resin composition in Example 1 was changed to carbon fiber (Carbon Fiber Roving T300-12000 manufactured by Toray Industries, Inc.), and performance evaluation thereof was conducted. It was confirmed that warping was sufficiently suppressed even in this brake pad.

## Claims

1. A brake pad for a disc brake comprising:
a resin back plate (10); and
a friction material (30) joined to one surface of the resin back plate (10),
wherein the resin back plate (10) is formed of a cured product of a first thermosetting resin composition (300), and
a metal reinforcing material (20, 400) is provided over a surface of the resin back plate (10) opposite to the surface joined to the friction material (30),
wherein the metal reinforcing material (20, 400) is at least one kind of metal reinforcing material (20, 400) selected from the group consisting of a plate material, a mesh material, and a bar material,
wherein a portion of the metal reinforcing material (20, 400) is embedded in the resin back plate (10), and a portion of a surface of the metal reinforcing material (20, 400) is exposed,
wherein, when it is assumed that the surface of the resin back plate (10) opposite to the surface joined to the friction material (30) is an upper surface and an area of the upper surface is S, an area of the metal reinforcing material (20, 400) when seen in a plan view is S/2 or more, and
wherein, when it is assumed that at a point over the surface of the back plate opposite to the surface joined to the friction material (30), a thickness of the back plate at the point is T, the metal reinforcing material (20, 400) is not present at a depth of T/2 or more from the surface opposite to the surface joined to the friction material (30) at the point.

2. The brake pad according to claim 1,
wherein a Young's modulus of a metal forming the metal reinforcing material (20, 400) is larger than a Young's modulus of the cured product of the first thermosetting resin composition (300) forming the resin back plate (10).

3. The brake pad according to claim 1 or 2,
wherein the metal reinforcing material (20, 400) is not in contact with the friction material (30).

4. The brake pad according to any one of claims 1 to 3,
wherein a specific gravity of the brake pad is 0.8 or more and 5.0 or less.

5. The brake pad according to any one of claims 1 to 4,
wherein the friction material (30) is a cured product of a second thermosetting resin composition.

6. The brake pad according to claim 5,
wherein the cured product of the second thermosetting resin composition and the cured product of the first thermosetting resin composition (300) contain the same or the same kind of thermosetting resin.

7. The brake pad according to any one of claims 1 to 6,
wherein the cured product of the first thermosetting resin composition (300) contains at least one kind of resin selected from the group consisting of a phenol resin, a polyimide resin, an epoxy resin, and a bismaleimide resin.

8. The brake pad according to claim 5 or 6,
wherein the cured product of the second thermosetting resin composition contains a phenol resin.

9. The brake pad according to any one of claims 1 to 8,
wherein the friction material (30), the resin back plate (10), and the metal reinforcing material (20, 400) are integrally molded by steps of
(i) disposing a forming material of the friction material (30) in a mold (100),
(ii) disposing the first thermosetting resin composition (300) in the mold (100),
(iii) disposing the metal reinforcing material (20, 400) in the mold (100) so that the metal reinforcing material (20, 400) is in a form of biting into the first thermosetting resin composition (300), and
(iv) collectively applying heat and pressure to the forming material of the friction material (30), the first thermosetting resin composition (300), and the metal reinforcing material (20, 400) disposed in the mold (100),
wherein the metal reinforcing material (20, 400) is at least one kind of metal reinforcing material (20, 400) selected from the group consisting of a plate material, a mesh material, and a bar material and
wherein a step of further disposing the first thermosetting resin composition (300) is not performed between steps (iii) and (iv) .

## Patentansprüche

1. Bremsbelag für eine Scheibenbremse, umfassend:
eine Rückplatte aus Harz (10); und
ein Reibmaterial (30), das mit einer Oberfläche der Rückplatte aus Harz (10) verbunden ist,
wobei die Rückplatte aus Harz (10) aus einem gehärteten Produkt einer ersten wärmehärtenden Harzzusammensetzung (300) gebildet ist, und
ein Metallverstärkungsmaterial (20, 400) über einer Oberfläche der Rückplatte aus Harz (10) gegenüber der mit dem Reibmaterial (30) verbundenen Oberfläche vorgesehen ist,
wobei das Metallverstärkungsmaterial (20, 400) mindestens eine Art von Metallverstärkungsmaterial (20, 400), ausgewählt aus der Gruppe bestehend aus einem Plattenmaterial, einem Netzmaterial und einem Stabmaterial, ist,
wobei ein Teil des Metallverstärkungsmaterials (20, 400) in die Rückplatte aus Harz (10) eingebettet ist und ein Teil einer Oberfläche des Metallverstärkungsmaterials (20, 400) freiliegt,
wobei, wenn angenommen wird, dass die Oberfläche der Rückplatte aus Harz (10), die der mit dem Reibmaterial (30) verbundenen Oberfläche gegenüberliegt, eine obere Oberfläche ist und ein Bereich der oberen Oberfläche S ist, ein Bereich des Metallverstärkungsmaterials (20, 400) in einer Draufsicht gesehen S/2 oder mehr ist, und
wobei, wenn angenommen wird, dass an einem Punkt über der Oberfläche der Rückplatte gegenüber der Oberfläche, die mit dem Reibmaterial (30) verbunden ist, eine Dicke der Rückplatte an dem Punkt T ist, das Metallverstärkungsmaterial (20, 400) nicht in einer Tiefe von T/2 oder mehr von der Oberfläche gegenüber der Oberfläche, die an dem Punkt mit dem Reibmaterial (30) verbunden ist, vorhanden ist.

2. Bremsbelag nach Anspruch 1,
wobei ein Elastizitätsmodul eines Metalls, das das Metallverstärkungsmaterial (20, 400) bildet, größer ist als ein Elastizitätsmodul des gehärteten Produkts der ersten wärmehärtenden Harzzusammensetzung (300), die die Rückplatte aus Harz (10) bildet.

3. Bremsbelag nach Anspruch 1 oder 2,
wobei das Metallverstärkungsmaterial (20, 400) nicht in Kontakt mit dem Reibmaterial (30) ist.

4. Bremsbelag nach einem der Ansprüche 1 bis 3,
wobei das spezifische Gewicht des Bremsbelags 0,8 oder mehr und 5,0 oder weniger beträgt.

5. Bremsbelag nach einem der Ansprüche 1 bis 4,
wobei das Reibmaterial (30) ein gehärtetes Produkt einer zweiten wärmehärtenden Harzzusammensetzung ist.

6. Bremsbelag nach Anspruch 5,
wobei das gehärtete Produkt der zweiten wärmehärtenden Harzzusammensetzung und das gehärtete Produkt der ersten wärmehärtenden Harzzusammensetzung (300) das gleiche oder die gleiche Art von wärmehärtendem Harz enthalten.

7. Bremsbelag nach einem der Ansprüche 1 bis 6,
wobei das gehärtete Produkt der ersten wärmehärtenden Harzzusammensetzung (300) mindestens eine Art von Harz, ausgewählt aus der Gruppe bestehend aus einem Phenolharz, einem Polyimidharz, einem Epoxidharz und einem Bismaleimidharz, enthält.

8. Bremsbelag nach Anspruch 5 oder 6,
wobei das gehärtete Produkt der zweiten wärmehärtenden Harzzusammensetzung ein Phenolharz enthält.

9. Bremsbelag nach einem der Ansprüche 1 bis 8,
wobei das Reibmaterial (30), die Rückplatte aus Harz (10) und das Metallverstärkungsmaterial (20, 400) einstückig geformt sind durch die Schritte
(i) Einbringen eines Formmaterials des Reibmaterials (30) in eine Form (100),
(ii) Einbringen der ersten wärmehärtenden Harzzusammensetzung (300) in die Form (100),
(iii) Einbringen des Metallverstärkungsmaterials (20, 400) in die Form (100), so dass das Metallverstärkungsmaterial (20, 400) in einer Form vorliegt, in der es in die erste wärmehärtende Harzzusammensetzung (300) eindringt, und
(iv) gemeinsames Anwenden von Wärme und Druck auf das Formmaterial des Reibmaterials (30), die erste wärmehärtende Harzzusammensetzung (300) und das Metallverstärkungsmaterial (20, 400), die in die Form (100) eingebracht sind,
wobei das Metallverstärkungsmaterial (20, 400) mindestens eine Art von Metallverstärkungsmaterial (20, 400), ausgewählt aus der Gruppe bestehend aus einem Plattenmaterial, einem Netzmaterial und einem Stabmaterial, ist,
wobei ein Schritt des weiteren Aufbringens der ersten wärmehärtenden Harzzusammensetzung (300) nicht zwischen den Schritten (iii) und (iv) durchgeführt wird.

## Revendications

1. Plaquette de frein pour un frein à disque comportant :
une plaque arrière en résine (10) ; et
un matériau de friction (30) assemblé à une surface de la plaque arrière en résine (10),
dans laquelle la plaque arrière en résine (10) est formée d'un produit durci d'une première composition de résine thermodurcissable (300), et
un matériau de renfort métallique (20, 400) est agencé sur une surface de la plaque arrière en résine (10) opposée à la surface assemblée au matériau de friction (30),
dans laquelle le matériau de renfort métallique (20, 400) est au moins un type de matériau de renfort métallique (20, 400) choisi parmi le groupe constitué d'un matériau en plaque, d'un matériau en treillis et d'un matériau en barre,
dans laquelle une partie du matériau de renfort métallique (20, 400) est incorporée dans la plaque arrière en résine (10), et une partie d'une surface du matériau de renfort métallique (20, 400) est exposée,
dans laquelle, lorsqu'il est supposé que la surface de la plaque arrière en résine (10) opposée à la surface assemblée au matériau de friction (30) est une surface supérieure et qu'une aire de la surface supérieure est S, une aire du matériau de renfort métallique (20, 400) lorsque vu en vue de dessus est S/2 ou plus, et
dans laquelle, lorsqu'il est supposé qu'en un point sur la surface de la plaque arrière opposée à la surface assemblée au matériau de friction (30), une épaisseur de la plaque arrière en ce point est T, le matériau de renfort métallique (20, 400) n'est pas présent à une profondeur de T/2 ou plus par rapport à la surface opposée à la surface assemblée au matériau de friction (30) en ce point.

2. Plaquette de frein selon la revendication 1,
dans laquelle un module de Young d'un métal formant le matériau de renfort métallique (20, 400) est supérieur à un module de Young du produit durci de la première composition de résine thermodurcissable (300) formant la plaque arrière en résine (10).

3. Plaquette de frein selon la revendication 1 ou 2,
dans laquelle le matériau de renfort métallique (20, 400) n'est pas en contact avec le matériau de friction (30).

4. Plaquette de frein selon l'une quelconque des revendications 1 à 3,
dans laquelle une densité de la plaquette de frein est de 0,8 ou plus et 5,0 ou moins.

5. Plaquette de frein selon l'une quelconque des revendications 1 à 4,
dans laquelle le matériau de friction (30) est un produit durci d'une seconde composition de résine thermodurcissable.

6. Plaquette de frein selon la revendication 5,
dans laquelle le produit durci de la seconde composition de résine thermodurcissable et le produit durci de la première composition de résine thermodurcissable (300) contiennent la même résine thermodurcissable ou le même type de résine thermodurcissable.

7. Plaquette de frein selon l'une quelconque des revendications 1 à 6,
dans laquelle le produit durci de la première composition de résine thermodurcissable (300) contient au moins un type de résine choisi parmi le groupe constitué d'une résine phénolique, d'une résine de polyimide, d'une résine époxyde et d'une résine de bismaléimide.

8. Plaquette de frein selon la revendication 5 ou 6,
dans laquelle le produit durci de la seconde composition de résine thermodurcissable contient une résine phénolique.

9. Plaquette de frein selon l'une quelconque des revendications 1 à 8,
dans laquelle le matériau de friction (30), la plaque arrière en résine (10) et le matériau de renfort métallique (20, 400) sont moulés d'un seul tenant par les étapes consistant à
(i) disposer un matériau de façonnage du matériau de friction (30) dans un moule (100),
(ii) disposer la première composition de résine thermodurcissable (300) dans le moule (100),
(iii) disposer le matériau de renfort métallique (20, 400) dans le moule (100) de sorte que le matériau de renfort métallique (20, 400) a une forme mordant dans la composition de résine thermodurcissable (300), et
(iv) appliquer collectivement de la chaleur et une pression au matériau de façonnage du matériau de friction (30), à la première composition de résine thermodurcissable (300) et au matériau de renfort métallique (20, 400) disposé dans le moule (100),
dans lequel le matériau de renfort métallique (20, 400) est au moins un type de matériau de renfort métallique (20, 400) choisi parmi le groupe constitué d'un matériau en plaque, d'un matériau en treillis et d'un matériau en barre, et
dans lequel une étape consistant à disposer en outre la première composition de résine thermodurcissable (300) n'est pas réalisée entre les étapes (iii) et (iv).
